# FASCICULE DE BREVET EUROPEEN

(11) **EP 0 440 551 B1**
(45) Date de publication et mention de la délivrance du brevet: **09.04.1997**
(21) Numéro de dépôt: 91400205.0
(22) Date de dépôt: 29.01.1991
(51) Int. Cl.: H04N 5/64

(54) **Installation sonore pour téléviseur**
Tonausrüstung für einen Fernseher
Sound installation for a television

(30) Priorité: 02.02.1990 FR 9001228
(43) Date de publication de la demande: 07.08.1991
(73) Titulaire: SOCIETE ELECTRONIQUE DE LA REGION PAYS DE LOIRE, F-92400 - Courbevoie (FR)
(72) Inventeur: Chatelain, Jean-Yves, F-92045 Paris la Défense (FR); Renard, Francis, F-92045 Paris la Défense (FR)
(74) Mandataire: Ruellan-Lemonnier, Brigitte

(56) Documents cités:
- EP-A- 0 117 487
- DE-A- 2 806 580

## Description

La présente invention se rapporte à une installation sonore pour téléviseur.

Les considérations esthétiques actuelles en matière de téléviseurs, en particulier de téléviseurs à écrans presque plats de grandes dimensions, imposent des coffrets présentant, de chaque côté du tube cathodique des "colonnes sonores" de très faible largeur. Or, on sait que pour reproduire correctement les fréquences basses du spectre sonore, il faut utiliser des haut-parleurs de grandes dimensions, de préférence des haut-parleurs circulaires ou elliptiques. De tels haut-parleurs ne peuvent être logés dans ces colonnes sonores étroites. On résout actuellement le problème soit en utilisant des haut-parleurs de basses trop petits ou de forme très allongée, soit en branchant des haut-parleurs extérieurs disposés dans des baffles indépendants du téléviseur. Pour une reproduction stéréophonique, il faut donc deux tels baffles.

On connaît également des installations sonores de téléviseurs dont les haut-parleurs de basses sont disposés dans des enceintes acoustiques logées à l'intérieur du coffret. Pour pouvoir utiliser des haut-parleurs de basses de dimensions suffisantes (d'un diamètre généralement supérieur à 10 cm), il faut disposer ces enceintes dans un espace disponible du coffret qui soit suffisamment grand, c'est-à-dire à l'arrière du coffret ou sur les parois latérales de ce coffret. Cependant, il résulte du choix de tels emplacements une trop grande proximité entre les haut-parleurs et le déviateur du tube cathodique, et des vibrations parasites des parois sur lesquelles sont fixées les enceintes.

La présente invention a pour objet une installation sonore pour téléviseur qui permette d'utiliser des haut-parleurs de basses de dimensions suffisantes et qui ne présente pratiquement pas de parasitages dus aux haut-parleurs, tout en assurant une bonne reproduction sonore.

L'installation sonore de téléviseur conforme à l'invention comporte au moins une enceinte disposée dans le coffret du téléviseur, sous le tube cathodique et à proximité de la façade, de préférence près d'un coin du coffret, cette (ces) enceinte(s) comportant au moins un haut-parleur reproduisant au moins la partie basse du spectre sonore, ce haut-parleur étant dirigé vers le bas. De préférence, l'enceinte est close et comporte un trou évent dirigé vers la façade du coffret du téléviseur.

La présente invention sera mieux comprise à la lecture de la description détaillée d'un mode de réalisation, pris à titre d'exemple non limitatif, et illustré par le dessin annexé, sur lequel :

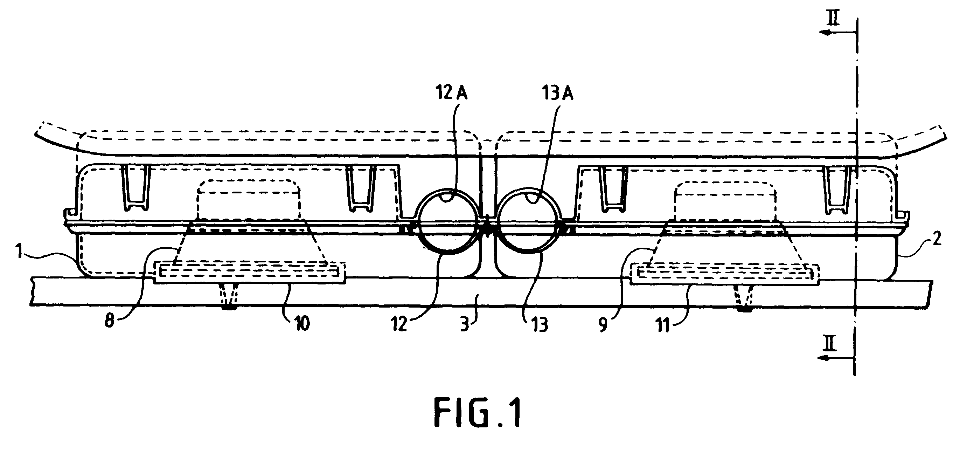

- la figure 1 est une vue de face d'une installation sonore conforme à l'invention, la façade du coffret étant enlevée, et

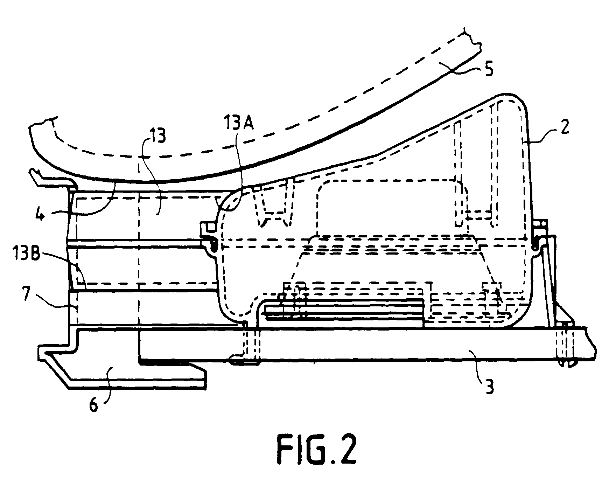

- la figure 2 est une vue de l'installation de la figure 1, en coupe selon II-II.

L'invention est décrite ci-dessous en référence à une installation stéréophonique pour téléviseur, mais bien entendu, elle peut s'appliquer à une installation monophonique.

L'installation sonore décrite ci-dessous comporte deux enceintes closes 1,2 fixées sur le fond 3 du coffret du téléviseur. Pour simplifier le dessin, on n'a représenté qu'une partie du téléviseur, en particulier la partie antérieure du coffret et de la verrerie du tube cathodique. Cette installation utilise un coffret tel que sa paroi inférieure 3 est suffisamment distante de la partie inférieure de la jupe 4 du tube cathodique pour permettre le passage des tubes-évents, formés avec les enceintes 1,2 (décrits ci-dessous), et de loger ces enceintes sous la partie antérieure 5 du cône du tube cathodique. De façon avantageuse, la distance entre la paroi 3 et la jupe 4 est d'au moins 5 cm environ, et de préférence d'au moins 10 cm environ.

Pour permettre la sortie de l'onde avant des haut-parleurs contenus dans ces enceintes 1,2, le coffret repose sur des pattes 6 permettant de surélever la face inférieure du coffret du téléviseur d'au moins environ 1 cm par rapport au support sur lequel est posé le téléviseur. Bien entendu, si le téléviseur est destiné à être posé sur un support suffisamment ajouré, ces pattes peuvent être omises.

Les enceintes 1,2 sont fixées de la façon la plus rapprochée possible de la façade 7 du téléviseur.

Les enceintes 1,2 comportent chacune un haut-parleur 8,9 respectivement.

Ces haut-parleurs 8,9 sont du type reproduisant les fréquences basses et médium du spectre sonore. Les haut-parleurs destinés à la reproduction des fréquences hautes du spectre sonore n'ont pas besoin d'être disposés dans les enceintes, et du fait qu'ils sont généralement de petites dimensions, ils peuvent être fixés sur la face arrière de la façade 7, par exemple de chaque côté du tube cathodique, ou dans les coins supérieurs de cette façade. Bien entendu, si l'on dispose de suffisamment de place à l'intérieur du coffret du téléviseur, on peut réaliser des enceintes de plus grandes dimensions et loger dans chacune d'elles par exemple un haut-parleur pour les fréquences basses et un autre pour les fréquences du médium. Dans tous les cas, le ou les haut-parleurs ont leur ouverture dirigée vers le bas. Les enceintes 1 et 2 et le coffret ont donc dans leur paroi inférieure une ouverture correspondante 10,11.

De façon avantageuse, les haut-parleurs 8,9 sont disposés respectivement aux extrémités gauche et droite des enceintes 1,2. Egalement de façon avantageuse, on pratique des trous évents 12A,13A dans les parois antérieures des enceintes 1,2 et on les relie par des tubes 12,13 ayant sensiblement le même diamètre qu'eux à des orifices 12B,13B (seul 13B est visible sur le dessin) similaires pratiqués dans la façade du coffret. Ces trous évents peuvent être pratiqués dans les zones des parois antérieures des enceintes 1,2 proches du milieu de la façade, les tubes 12,13 étant alors proches l'un de l'autre. Si les enceintes 1,2 sont réalisées par moulage de matière plastique, par exemple en deux demi-coquilles, les tubes 12,13 sont formés intégralement avec ces enceintes. Bien entendu, les orifices de la façade dans lesquels débouchent les tubes 12,13 peuvent être masqués par une grille-décor, et ces tubes ne sont pas nécessairement rectilignes et de section constante. Les trous évents pourraient être pratiqués sur une autre paroi des enceintes et être reliés à des orifices disposés différemment, par exemple sur les parois latérales du coffret.

Comme précisé ci-dessus, les enceintes 1,2 sont avantageusement réalisées en matière plastique, en deux demi-coquilles. Après fixation des haut-parleurs sur les demi-coquilles inférieures, les demi-coquilles supérieures sont mises en place et soudées aux demi-coquilles inférieures par tout procédé approprié. Les enceintes ainsi obtenues sont fixées, par exemple par vissage ou encliquetage, sur la paroi inférieure du coffret du téléviseur. Bien entendu, les enceintes peuvent être fabriquées en d'autres matériaux et être constituées de façons différentes, par exemple pour être assemblées par encliquetage.

Ainsi, grâce à l'invention, l'éloignement important entre les haut-parleurs et le déviateur du tube cathodique évite pratiquement toute perturbation électromagnétique de l'image. En outre, du fait que les haut-parleurs sont disposés dans une enceinte qui débouche à l'extérieur du coffret du téléviseur, les ondes acoustiques des haut-parleurs ne se propagent pas à l'intérieur du coffret, et il n'y a donc pas de risques de vibration des composants du téléviseur.

## Revendications

1. Installation sonore de téléviseur, caractérisé par le fait qu'elle comporte au moins une enceinte (1, 2), disposée dans le coffret du téléviseur, sous le tube cathodique et à proximité de la façade, cette au moins une enceinte comportant au moins un haut-parleur (8,9) reproduisant au moins la partie basse du spectre sonore, ce au moins un haut-parleur étant dirigé vers le bas, et en ce que l'enceinte comporte un trou évent (12A,13A) débouchant à l'extérieur du coffret du téléviseur.

2. Installation selon la revendication 1, caractérisée par le fait que le trou évent est relié par un tube (12, 13) à un orifice correspondant pratiqué dans la façade.

3. Installation selon la revendication 2, caractérisée par le fait que chaque enceinte est close.

4. Installation selon l'une des revendications précédentes, caractérisée par le fait que l'enceinte est disposée près d'un coin du coffret.

5. Installation selon l'une des revendications précédentes, caractérisée par le fait que chaque enceinte est réalisée en matière plastique en deux parties assemblées après fixation du haut-parleur.

## Patentansprüche

1. Lautsprecheranlage für Fernsehgeräte, dadurch gekennzeichnet, daß sie mindestens eine Lautsprecherbox (1, 2) enthält, die im Gehäuse des Fernsehgeräts unter der Bildröhre und in der Nähe der Front untergebracht ist, wobei diese mindestens eine Box mindestens einen Lautsprecher (8, 9) enthält, der mindestens den Baßbereich des Schallspektrums wiedergibt und nach unten gerichtet ist, und daß die Box ein Luftloch (12A, 13A) enthält, das zum Gehäuseäußeren des Fernsehgeräts führt.

2. Lautsprecheranlage nach Anspruch 1, dadurch gekennzeichnet, daß das Luftloch durch ein Rohr (12, 13) mit einer entsprechenden Öffnung an der Front verbunden ist.

3. Lautsprecheranlage nach Anspruch 2, dadurch gekennzeichnet, daß jede Box geschlossen ist.

4. Lautsprecheranlage nach einem der vorangehenden Ansprüche, dadurch gekennzeichnet, daß die Box in einer Ecke des Gehäuses plaziert ist.

5. Lautsprecheranlage nach einem der vorangehenden Ansprüche, dadurch gekennzeichnet, daß jede Box aus zwei Kunststoffteilen besteht, die nach der Montage der Lautsprecher zusammengebaut werden.

## Claims

1. Sound installation for a television set, characterized in that it includes at least one enclosure (1, 2) arranged in the cabinet of the television set, under the cathode-ray tube and close to the front panel, this at least one enclosure including at least one loudspeaker (8, 9) reproducing at least the low part of the sound spectrum, this at least one loudspeaker being turned downwards, and in that the enclosure includes a vent hole (12A, 13A) opening out to the outside of the cabinet of the television set.

2. Installation according to Claim 1, characterized in that the vent hole is linked by a tube (12, 13) to a corresponding orifice formed in the front panel.

3. Installation according to Claim 2, characterized in that each enclosure is completely closed.

4. Installation according to one of the preceding claims, characterized in that the enclosure is arranged close to one corner of the cabinet.

5. Installation according to one of the preceding claims, characterized in that each enclosure is produced from plastic in two parts assembled after fixing the loudspeaker.
